## Europäisches Patentamt
## European Patent Office
## Office européen des brevets

(19)

(11) **EP 0 754 959 B1**

(12) **FASCICULE DE BREVET EUROPEEN**

(45) Date de publication et mention
de la délivrance du brevet:
**02.06.2004 Bulletin 2004/23**

(51) Int Cl.⁷: **G02B 26/08**

(21) Numéro de dépôt: **96401586.1**

(22) Date de dépôt: **17.07.1996**

(54) **Microéléments de balayage pour système optique**

Mikroabtastelemente für optisches System

Micro scanning elements for optical system

(84) Etats contractants désignés:
**DE FR GB IT**

(30) Priorité: **19.07.1995 FR 9508751**

(43) Date de publication de la demande:
**22.01.1997 Bulletin 1997/04**

(73) Titulaire: **COMMISSARIAT A L'ENERGIE ATOMIQUE**
**75015 Paris Cédex 15 (FR)**

(72) Inventeurs:
- **Valette, Serge**
  **38100 Grenoble (FR)**
- **Fouillet, Yves**
  **38340 Voreppe (FR)**

(74) Mandataire: **Moutard, Pascal Jean et al**
**Brevalex**
**3, Rue du Docteur Lancereaux**
**75008 Paris (FR)**

(56) Documents cités:
**EP-A- 0 614 101**      **US-A- 5 281 887**

- **IBM TECHNICAL DISCLOSURE BULLETIN, vol. 20, no. 1, Juin 1977, NEW YORK US, pages 355-356, XP002001788 K.E. PETERSEN: "Micromechanical light deflector array"**
- **IBM TECHNICAL DISCLOSURE BULLETIN, vol. 22, no. 12, Mai 1980, NEW YORK US, pages 5575-5577, XP002001789 A.M. HARTSTEIN: "Color projection display system using silicon micromechanics"**

**Description**

Domaine technique

La présente invention concerne le domaine des microéléments de balayage pour système optique, en particulier les micromiroirs orientables pour système optomécanique et leurs procédés de réalisation.

De tels composants trouvent leur application dans des systèmes optiques miniaturisés dont le besoin se fait sentir dans de nombreuses applications, notamment dans le domaine automobile, médical ou dans le domaine du contrôle industriel. Un des éléments clés de ces microsystèmes est l'élément de balayage des faisceaux lumineux, dont la réalisation présente des difficultés particulières dès que les angles de déflexion recherchés dépassent quelques degrés.

Etat de la technique

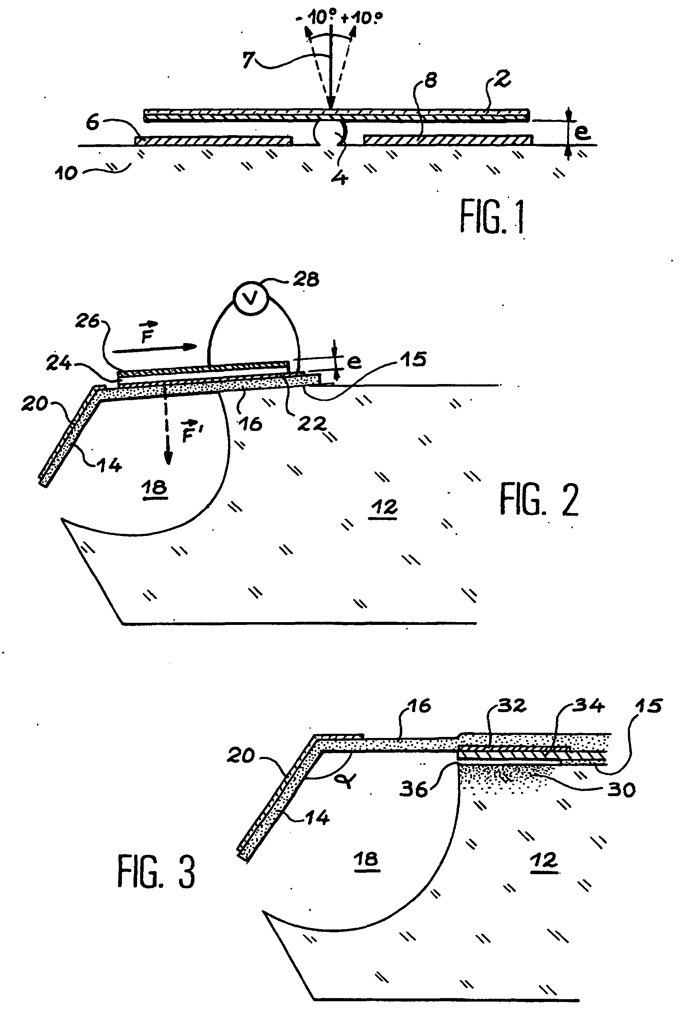

Un premier dispositif connu est décrit dans un article de M.A. Mignardi intitulé "Digital micromirror array for projection TV", paru dans Solide State Technology, pages 63-68, Juillet 1994. Ce dispositif est schématisé sur la figure 1 et comporte un micromiroir 2 qui présente une surface supérieure réfléchissante et qui joue également le rôle d'électrode supérieure par rapport à deux électrodes inférieures 6, 8 déposées sur un substrat 10. En jouant sur les tensions appliquées entre les différentes électrodes, il est possible de faire subir au miroir 2 un mouvement de déflexion autour d'une poutre de torsion 4. Ceci entraîne la déviation d'un faisceau incident 7 d'un angle α compris entre environ +10° et -10°. Dans ce type de dispositif, les contraintes de réalisation technologique et la nécessité de réaliser le meilleur compromis possible entre les tensions de commande des électrodes et une valeur élevée de l'angle de déflexion conduisent à élaborer des schémas plus complexes, comme celui décrit dans l'article de T. Usuda, intitulé "Mechanical sensors : a novel silicon torsional resonator with two degrees of freedom", paru dans The 7th Int. Conf. on Solid State Sensors and actuators, pages 10 et 11, June 1993. En effet, dans le schéma de la figure 1, une distance interélectrode e la plus petite possible est nécessaire afin de minimiser les tensions de commande, ce qui s'oppose à une grande amplitude de déflexion. Les schémas plus complexes existants essayent donc de séparer la zone de commande et la zone de réflexion des miroirs par différentes astuces (forme géométrique, double axe de torsion,...). Tous ces dispositifs ont en commun de fonctionner sur les mêmes principes : ils renvoient le faisceau vers le demi-espace d'où provient le faisceau incident.

Un autre dispositif est décrit dans l'article de H. Goto, intitulé "High performances microphotonic devices with microactuator", paru dans SPIE, Miniature and Micro-Optics and Micromechanics, pages 32 à 39, 1993. Dans ce cas une structure miroir de forme géométrique bien calculée est collée sur un élément piézoélectrique. La vibration unidirectionnelle de la céramique excite les modes propres du résonateur constitué par le miroir et lui imprime une oscillation résonnante suivant deux directions, quand les fréquences de commande de l'élément piézoélectrique correspondent aux fréquences du résonateur. Ce système est intéressant car il permet un balayage à deux degrés de liberté, mais il ne fait pas véritablement appel aux microtechnologies et il n'est pas compatible avec un mode de fabrication collective.

L'article "Micromechanical Light Deflector Array" (IBM Technical Disclosure Bulletin, vol. 20, n°1, June 1977) décrit un microélément de balayage pour système optique.

La demande de brevet EP-A-0 614 101 décrit un déflecteur optique.

Exposé de l'invention

L'invention a tout d'abord pour objet de proposer un nouveau type de microéléments de balayage pour système optique, compatible avec les techniques de fabrication collective.

Plus précisément, l'invention a pour objet un microélément de balayage pour système optique comprenant :

- un substrat
- une membrane en un matériau diélectrique déposé sur une surface du substrat, la membrane définissant deux plans faisant entre eux un angle α non nul, une partie de la membrane présentant une zone réfléchissante et pouvant subir une déflexion selon au moins une première direction, au-dessus d'une cavité pratiquée dans le substrat,
- des moyens pour faire subir à cette partie de la membrane une déflexion selon au moins une direction,

caractérisé en ce qu'il comprend des moyens pour faire subir à ladite partie de la membrane une déflexion selon au moins une deuxième direction différente de la première direction.

Cet élément est entièrement compatible avec les techniques collectives de fabrication connues dans le domaine de la microélectronique.

En outre, la partie de la membrane située au-dessus de la cavité peut subir une déflexion suivant au moins une deuxième direction au-dessus de la cavité.

L'amplitude suivant une des directions de déflexion peut alors être supérieure à l'amplitude suivant une des autres directions de déflexion.

La partie de la membrane pouvant subir une déflexion peut être reliée par une micropoutre à une partie fixe qui porte les moyens pour faire subir une déflexion à la partie mobile.

La partie fixe peut alors présenter un axe de symétrie par rapport auquel la micropoutre est parallèle. Cette dernière peut être décalée par rapport à cet axe. La partie mobile de la membrane peut être décalée latéralement par rapport à l'axe de symétrie de la partie fixe. De plus, les moyens pour faire subir une déflexion à la partie mobile peuvent comporter plusieurs groupes de moyens répartis de part et d'autre de l'axe de symétrie.

Les moyens de déflexion peuvent être du type piézoélectrique ou électrostatique.

En outre, la partie de la membrane pouvant subir une déflexion peut être orientée suivant un plan cristallographique du substrat.

La cavité peut être située au bord d'une ouverture débouchante pratiquée dans le substrat, cette ouverture débouchante pouvant éventuellement être une ouverture traversant toute l'épaisseur du substrat.

Un dispositif de microoptique peut par ailleurs comporter un microélément tel que décrit ci-dessus, associé à une seconde zone réfléchissante disposée sur le substrat de manière à réfléchir, en direction de la zone réfléchissante de la membrane, un faisceau lumineux, dit faisceau entrant, provenant d'une certaine direction, celui-ci subissant alors deux réflexions successives pour former ensuite un faisceau sortant.

La seconde zone réfléchissante est disposée sur le substrat : elle peut être réalisée directement sur le substrat, ou bien elle peut être rapportée sur celui-ci.

Cette deuxième zone réfléchissante peut être formée par ou sur une paroi d'une ouverture débouchante ou traversante pratiquée dans le substrat. Cette paroi peut par ailleurs être orientée suivant un plan cristallographique du substrat.

Selon un mode de réalisation particulier, un dispositif microoptique selon l'invention permet de résoudre le problème de l'assemblage de plaquettes entières de composants. En effet, au-delà de la fabrication collective des composants entrant en jeu dans un microsystème, il est souhaitable, en particulier pour des raisons de coût, que leur assemblage puisse également se faire au niveau de plaquettes entières et non pas seulement d'éléments individuels. De plus, il est important que l'architecture des différents composants à assembler permette de la manière la plus simple possible leur empilement. Pour qu'un tel empilement soit possible avec des éléments de microbalayage ou des dispositifs de microoptique incorporant de tels éléments, il est souhaitable que la déflexion du faisceau lumineux se fasse vers l'avant du dispositif, et non pas vers l'arrière, c'est-à-dire que l'angle défini par un faisceau entrant dans le dispositif et un faisceau sortant du dispositif soit supérieur à 90°.

Afin de résoudre ce problème, un dispositif de microoptique tel que décrit ci-dessus peut en outre être caractérisé en ce que la seconde zone réfléchissante soit disposée de façon à ce que le faisceau entrant et le faisceau sortant fassent entre eux un angle supérieur à 90°.

Les deux zones réfléchissantes peuvent définir deux plans sensiblement parallèles lorsque la membrane est en position de repos. Ces deux plans peuvent être parallèles à un plan cristallographique donné du substrat.

L'invention concerne également un dispositif de micro-optique comportant :

-    un substrat,
-    une première membrane en un matériau diélectrique déposée sur une première surface du substrat, la membrane définissant deux plans faisant entre eux un angle $\alpha$ non nul, une partie de la première membrane présentant une première zone réfléchissante, et pouvant subir une déflexion selon au moins une première direction par rapport à une première cavité pratiquée dans le substrat,
-    des premiers moyens pour faire subir à cette partie de la première membrane une déflexion selon au moins la première direction,
-    une deuxième membrane en un matériau diélectrique déposée sur une deuxième surface du substrat, la membrane définissant deux plans faisant entre eux un angle $\beta$ non nul, une partie de la deuxième membrane présentant une deuxième zone réfléchissante, et pouvant subir une déflexion selon au moins une deuxième direction par rapport à une deuxième cavité pratiquée dans le substrat,
-    des deuxièmes moyens pour faire subir à cette partie de la deuxième membrane une déflexion selon au moins la deuxième direction,

caractérisé en ce que le dispositif comprend :

-    des moyens pour faire subir à ladite partie de la première membrane une déflexion selon au moins une direction différente de la première direction, et
-    des moyens pour faire subir à ladite partie de la deuxième membrane une déflexion selon au moins une direction différente de la deuxième direction.

Brève description des figures

-    la figure 1 représente un dispositif selon l'art antérieur,
-    les figures 2 et 3 sont des modes de réalisation de l'invention,
-    les figures 4 à 10 représentent diverses formes de membrane vibrante,
-    les figures 11, 12 et 13 représentent trois exemples de dispositif comportant un élément selon l'invention,
-    les figures 14 à 21 représentent des étapes de réalisation de microéléments selon l'invention
-    la figure 22 représente schématiquement deux surfaces réfléchissantes dans un dispositif selon l'invention
- la figure 23 représente deux composants selon l'invention, en cascade.

Description détaillée de modes de réalisation

La figure 2 est un premier exemple de réalisation d'un dispositif selon l'invention. Sur cette figure la référence 12 désigne un substrat, d'un matériau isolant ou semi-conducteur, par exemple un substrat en silicium. Une cavité 18 a été ouverte dans ce substrat. Avant que la matière occupant cette cavité ne soit éliminée, un dépôt préalable d'une membrane 14, 16 en un matériau diélectrique a été réalisé sur la surface 15 du substrat. L'ouverture de la cavité 18 a permis de libérer une partie de la membrane, en particulier la partie 14. Cette dernière est de préférence traitée, par exemple par un revêtement 20, de façon à former une zone réfléchissante (appelée aussi miroir dans le reste de la description) pour une certaine gamme de longueurs d'onde. L'extrémité 14 de la membrane, sur laquelle se trouve au moins une partie de la zone réfléchissante, est mobile. Elle peut subir une déflexion, par exemple suivant une direction sensiblement perpendiculaire à son plan, comme indiqué sur la figure 2 (mouvement d'élongation). Ces déflexions peuvent être induites par des moyens de déflexion, du type piézoélectrique ou électrostatique. Sur la figure 2 sont représentés des moyens piézoélectriques, comportant une électrode inférieure 22, disposée par dessus la membrane 16, une couche 24 d'un matériau piézoélectrique et une électrode supérieure 26. Des moyens 28 sont en outre prévus pour établir entre les électrodes 26 et 22 la tension voulue. La couche de matériau piézoélectrique peut être en ZnO, en CdS, en AlN ou en un matériau ferroélectrique, déposé sous forme de couches minces. Le mode d'excitation en élongation peut être mis en jeu avec des épaisseurs assez faibles de matériau piézoélectrique, ce qui permet de réaliser un dispositif peu encombrant. Le mode d'excitation en flexion demande une épaisseur de matériau piézoélectrique plus importante, mais rentre néanmoins dans le cadre de la présente invention. Dans le cas du mode en flexion, la force d'excitation imposée par le matériau piézoélectrique sur la membrane est dirigée suivant la flèche F' présentée en trait interrompu sur la figure 2, tandis que dans le cas du mode d'excitation en élongation, la force d'excitation est la force F représentée en trait plein sur la figure 2. D'une façon plus générale, le mode d'excitation en flexion ou en élongation dépend de l'orientation cristalline du matériau piézoélectrique et de sa géométrie, et, en particulier, de son épaisseur e.

Il est également possible d'utiliser, comme matériau piézoélectrique, des céramiques épaisses collées au-dessus de la membrane mobile, comme dans la publication de H. Goto, déjà citée ci-dessus dans l'introduction de la présente demande.

Une autre solution pour réaliser un moyen de déflexion de la membrane est de réaliser une commande électrostatique par électrodes en regard. Un tel dispositif est illustré sur la figure 3 où des références numériques identiques à celles de la figure 2 désignent les mêmes éléments. La référence 30 désigne une première électrode, en surface du substrat 12, la référence 32 désigne une deuxième électrode située sous la membrane 16 et sur un substrat 34, qui ne repose pas directement sur la face supérieure du substrat 12, mais en est séparée par un espacement 36 obtenu par suppression d'une couche de matière en surface du substrat 12. L'application, aux électrodes 30, 32 d'une certaine tension permet de les rapprocher ou de les éloigner l'une de l'autre, et d'obtenir un mouvement correspondant de la membrane 14, 16. Dans le cas où le substrat 12 est un substrat de silicium, l'électrode 30 peut être obtenue par implantation ionique superficielle de bore, pour former de la silice, et le substrat 34 peut être une couche mince de silicium. La solution consistant à réaliser une commande électrostatique demande une succession d'étapes technologiques sans doute un peu plus complexe que dans le cas d'une commande piézoélectrique, mais supprime évidemment l'utilisation de ce matériau piézoélectrique qui est toujours délicat à réaliser.

La membrane en matériau diélectrique peut avoir diverses formes. Sur les figures 2 et 3 la membrane définit en fait deux plans faisant entre eux, en particulier lorsque la membrane est au repos, un angle $\alpha$ supérieur ou strictement supérieur à 90°.

La zone réfléchissante 20, ou une partie de la zone réfléchissante 20, se situe, ou est déposée, sur la partie (mobile) de la membrane qui fait un angle $\alpha$ avec la surface 15 du substrat sur laquelle une partie fixe de la membrane est réalisée.

Il est clair qu'un réflecteur selon l'invention peut être réalisé, d'une manière générale, en donnant à l'angle $\alpha$ une valeur quelconque. Cependant, ainsi qu'on le verra plus loin, un angle $\alpha$ tel que la partie 14 de la membrane soit dirigée selon un plan cristallographique du substrat 12 peut être préféré. Des plages d'angle $\alpha$ comprises entre 90° et 135°, ou 120° et 130° peuvent, pour d'autres raisons, être préférées.

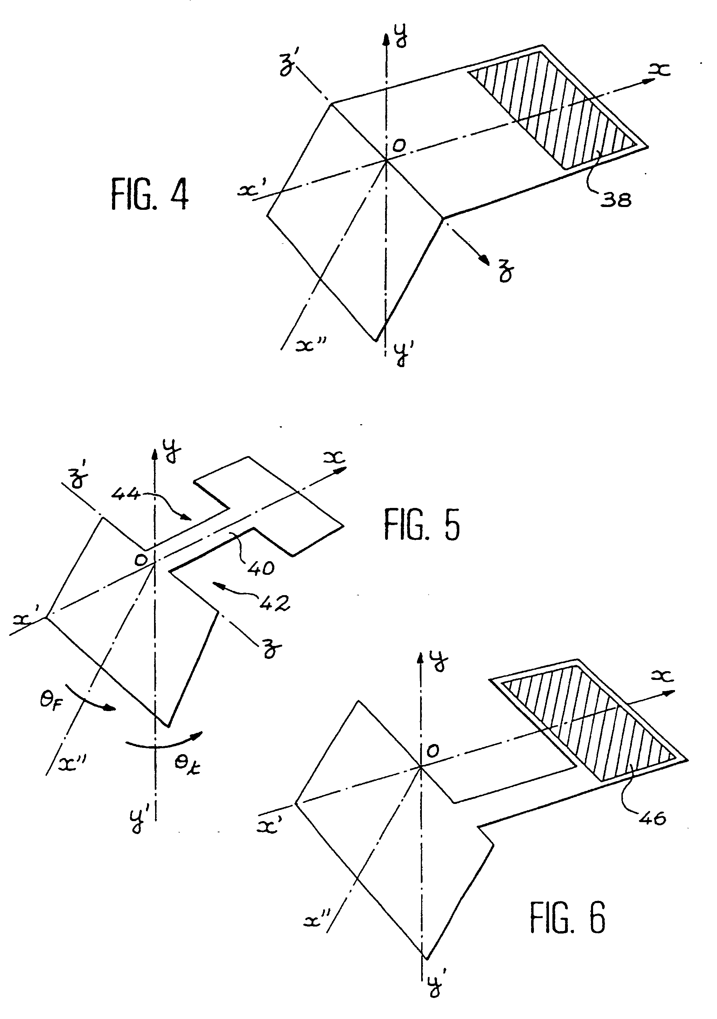

Une membrane, sans son substrat, est représentée en perspective sur la figure 4, la référence 38 désignant les moyens de déflexion de la membrane, par exemple des moyens électrostatiques tels qu'ils ont été décrits ci-dessus en liaison avec la figure 3. Dans le mode de réalisation de la figure 4, la membrane présente une largeur constante suivant un axe Oz, la seule possibilité d'actionnement étant alors en flexion autour de l'axe Oz.

Il peut être également intéressant de disposer d'une structure permettant d'entraîner le miroir, non pas (ou pas seulement) en flexion autour de l'axe Oz, mais aussi en torsion autour de l'axe Oy, comme illustré sur la figure 5. Sur cette dernière, la partie centrale de la membrane (entre la zone où sont disposés les moyens d'activation des mouvements du miroir, et le miroir lui-même) est réduite à une micropoutre 40. Ce mode de réalisation offre en outre l'avantage d'ouvrir des dégagements latéraux 42, 44 par lesquels il est possible d'attaquer le substrat lors de la réalisation de la cavité 18 (voir figure 2).

Il existé également des modes vibration mécanique d'ordre plus élevé, qui correspondent à des déformations plus complexes de la poutre. Cependant, si ces modes existent, quelle que soit la configuration géométrique des poutres, ils ne peuvent être efficacement excités que si le dispositif d'excitation utilisé, piézoélectrique ou électrostatique, induit une force mécanique dont la répartition spatiale par rapport à la poutre possède la symétrie convenable.

En particulier, une configuration de poutre telle que celle de la figure 5, associée à une paire d'électrodes unique (ou un seul cristal piézoélectrique) possédant le même axe de symétrie xx' dans le plan de la plaque permet une excitation du mode de flexion (correspondant à $\theta_f$ sur la figure 5), mais est plutôt mal adaptée pour exciter le mode de torsion (correspondant à $\theta_t$). Il est donc préférable d'adapter la géométrie du dispositif, en particulier la position de la poutre et la disposition des éléments du système d'excitation, au type de mode que l'on désire exciter.

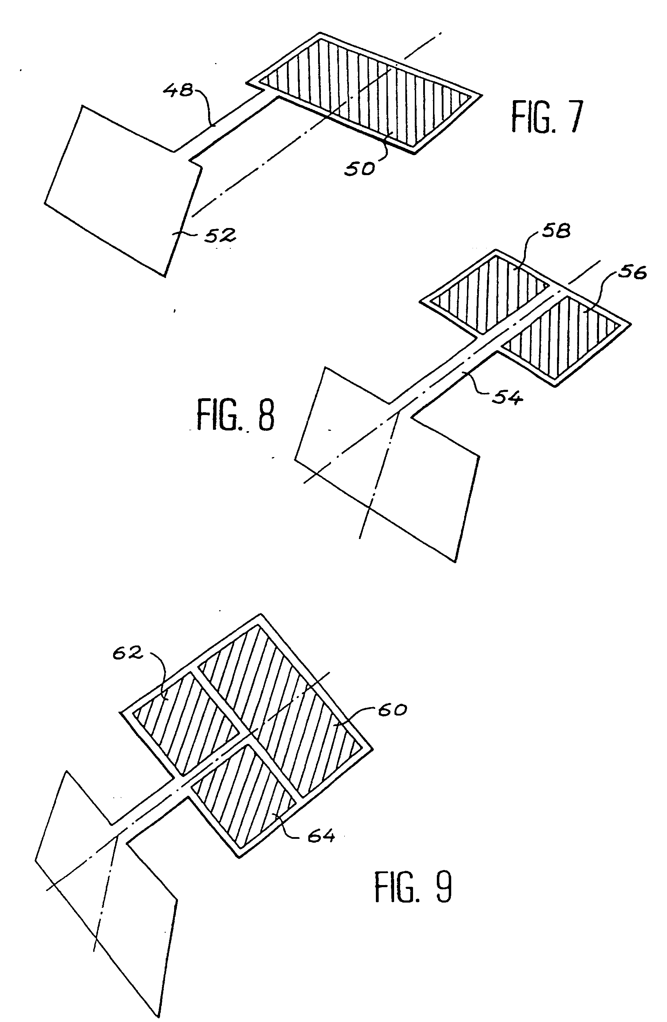

Une solution, pour obtenir une bonne excitation des deux modes de flexion et de torsion peut consister, comme illustré sur la figure 6, à utiliser une géométrie de poutre non symétrique par rapport à l'axe xx', la zone d'excitation pouvant rester unique et symétrique par rapport à ce même axe. La configuration de la figure 6 présente une dissymétrie, mais celle-ci est en fait encore peu marquée. Lorsque les contraintes spatiales, lors de la réalisation du dispositif, le permettent, il est possible d'accentuer encore cette dissymétrie, comme illustré sur la figure 7 où, par rapport à l'axe xx' et au dispositif d'excitation 50, la poutre 48 et le miroir 52 sont déportés au maximum vers la droite, c'est-à-dire dans la direction z'.

Une autre solution, pour pouvoir exciter simultanément les modes de torsion et de flexion, est illustrée sur la figure 8 et consiste à utiliser une configuration d'excitation comportant plusieurs groupes de moyens d'excitation, (plusieurs paires d'électrodes ou plusieurs cristaux piézoélectriques) qui permettent de modifier, par un adressage convenable, par exemple des paires d'électrodes ou des cristaux piézoélectriques mis en jeu, le mode d'excitation de la poutre 54. Sur la figure 8, sont schématisés deux groupes de moyens d'excitation sous la forme de deux paires d'électrodes 56, 58 pour une excitation du type électrostatique : les deux paires d'électrodes peuvent être adressées, en phase et/ou en opposition de phase suivant le mode de vibration mécanique à privilégier, par l'utilisation de fréquences d'excitation généralement différentes. Une configuration voisine, à trois paires d'électrodes 60, 62, 64 permet également de créer la dissymétrie souhaitée, comme illustré sur la figure 9.

Bien entendu, d'autres configurations peuvent être imaginées et les configurations décrites ci-dessus peuvent être combinées, afin de rompre la symétrie spatiale entre l'élément mobile (miroir et poutre) et les zones d'excitation.

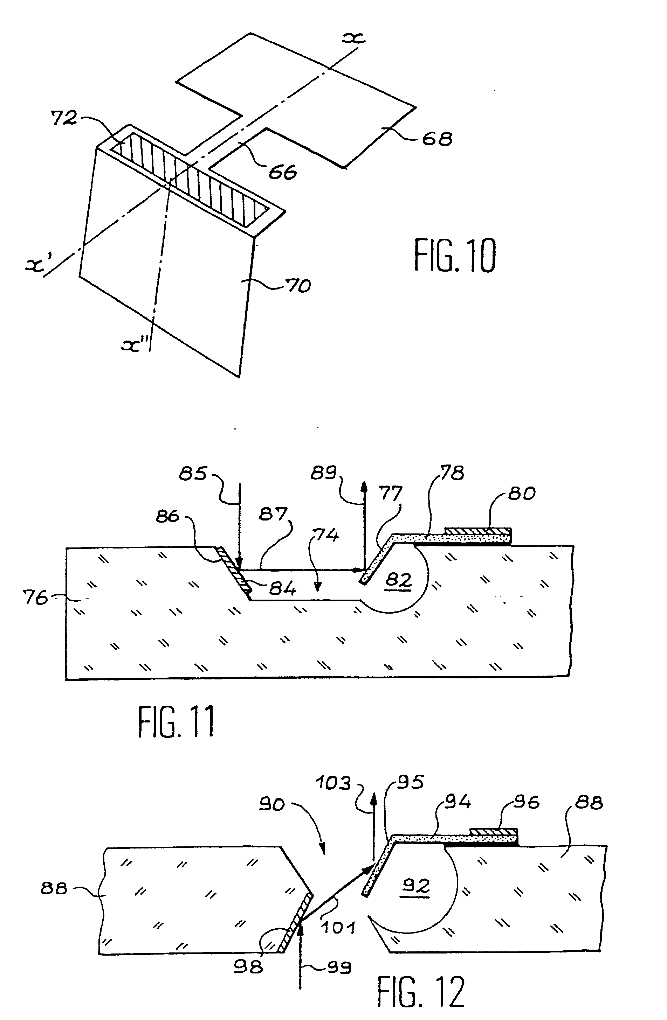

Par ailleurs, il peut être utile de favoriser, dans certains cas, l'amplitude d'une direction de balayage par rapport à l'amplitude d'une autre direction de balayage : c'est le cas de la télémétrie automobile où le balayage horizontal doit être de l'ordre de 10 à 20,° alors qu'un balayage vertical de l'ordre de 3° est suffisant. Au contraire, dans certaines autres applications, on cherchera à rendre à peu près égaux les angles de balayage dans les deux directions, et donc de faire en sorte que $\theta_t$ soit à peu près égal à $\theta_f$. Des configurations plus complexes, avec des évidements, permettent de jouer également sur l'amplitude respective des angles de balayage et sur les valeurs des fréquences de résonance des modes de vibration. Ainsi, sur la figure 10, une poutre 66 relie une zone d'excitation 68 à une zone miroir 70, cette dernière présentant, dans sa partie supérieure, un évidement 72 qui favorisera le mouvement de torsion. Là encore, il est possible de combiner ce dernier mode de réalisation avec les modes de réalisation déjà décrits ci-dessus.

Un autre mode de réalisation de l'invention est illustré sur la figure 11. Une membrane 78 en un matériau diélectrique avec son élément d'actionnement 80, sont déposés sur un substrat 76. Conformément à l'invention, une partie de la membrane, présentant une zone réfléchissante 77 peut subir une déflexion au-dessus d'une cavité 82 pratiquée dans le substrat 76. Par ailleurs, une autre ouverture 74 débouchant à la surface du substrat 76 est pratiquée dans ce dernier. Sur une paroi 86 de cette ouverture, une zone réfléchissante, par exemple un micromiroir fixe 84, peut être réalisée, qui permet par exemple de réfléchir un faisceau incident ou entrant 85 selon une direction 87 en direction de la zone réfléchissante 77 de la membrane. Cette dernière va réfléchir le faisceau 87 selon une direction 89 (faisceau sortant), les mouvements de flexion étirés ou de torsion de la membrane permettant de faire varier la direction du faisceau sortant 89.

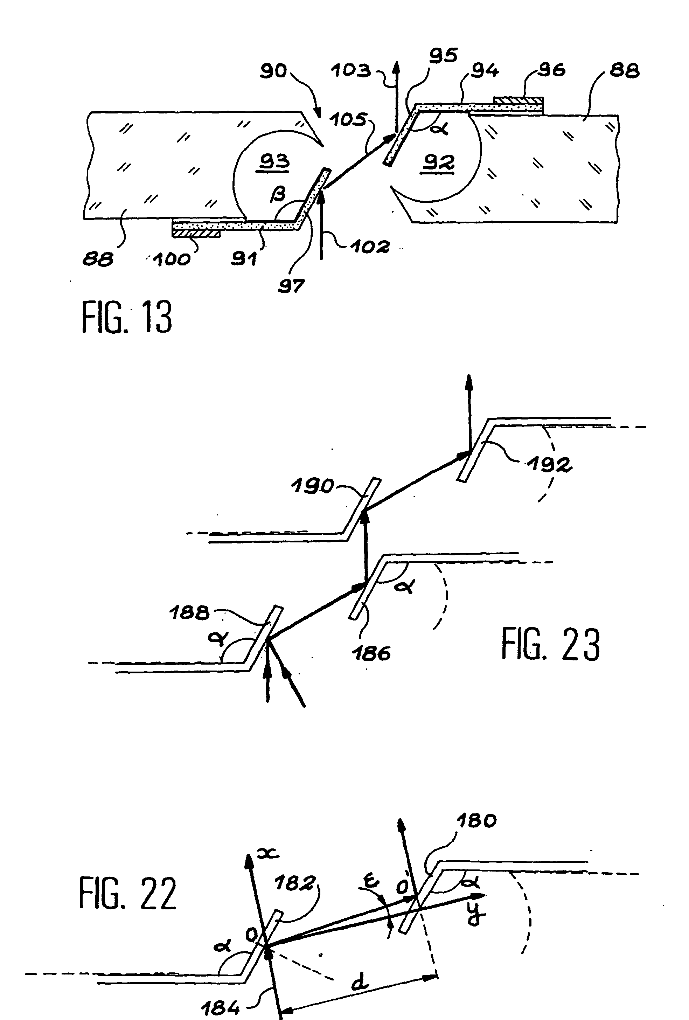

Selon une variante, représentée sur la figure 12, un trou traversant 90 est pratiqué dans le substrat 88. Une membrane, son élément excitation et la cavité sont désignés respectivement par les références 94, 96, 92. Sur une paroi de l'ouverture 90, située dans une zone inférieure par rapport à la zone où est déposée la membrane 94, peut être formée une surface réfléchissante, par exemple par un micromiroir fixe 98. Ce micromiroir peut être disposé de telle façon qu'un faisceau entrant 99 soit réfléchi sous la forme d'un faisceau 101 vers la membrane 94, la surface réfléchissante de cette dernière entraînant une seconde déviation pour former un faisceau sortant 103. Avec cette configuration, le faisceau entrant 99 et le faisceau sortant 103 font entre eux un angle proche de 180° en tout cas supérieur à 90°, ce qui n'est pas le cas avec la configuration représentée sur la figure 11 où l'angle entre les faisceaux entrant et sortant est proche de 0°. Suivant l'orientation de la zone réfléchissante 98 et pour certains faisceaux incidents 99, il est même possible d'obtenir un faisceau sortant 103 parallèle au faisceau entrant 99. Préférentiellement, la zone réfléchissante 95 de la membrane et la zone réfléchissante 98 forment deux plans parallèles ou sensiblement parallèles, par exemple lorsque la membrane 94 est au repos. Dans le cas d'un substrat 88 en silicium, ce résultat peut être obtenu en choisissant pour ces deux plans un plan cristallographique (plan 1,1,1 ou 1,-1,1).

Le dispositif de la figure 12 permet d'obtenir une direction du faisceau sortant à peu près identique ou en tout cas très voisine de la direction du faisceau incident. Dans les dispositifs avec un seul miroir cette condition ne pouvait être réalisée qu'en incidence rasante, ce qui pose de délicats problèmes de géométrie et d'alignement.

Une autre variante est illustrée sur la figure 13. Elle permet également d'obtenir une direction du faisceau sortant 103 à peu près identique à, ou en tout cas très voisine de, la direction du faisceau incident 102. Elle met en oeuvre deux microéléments de balayage conformes à l'invention, réalisés chacun sur une face d'un substrat, les deux microéléments se trouvant "tête bêche". Là encore, un trou traversant 90 est pratiqué dans le substrat 88, ou sépare les deux microéléments de balayage. Un premier élément comporte une membrane 94 et son élément d'excitation 96 au-dessus d'une cavité 92. Un second microélément est réalisé sur une autre surface du substrat 88, qui comporte une seconde cavité 93. Ce microélément comporte essentiellement une membrane 97, des moyens d'excitation 100 (du type piézoélectrique ou électrostatique, comme déjà décrit ci-dessus). Tout comme la membrane 94, la membrane 97 définit deux plans faisant entre eux un angle β non nul, de préférence supérieur à 90°, par exemple compris entre 90° et 135° ou entre 120° et 130°. Tout comme pour le premier microélément, la partie mobile de la seconde membrane 97 peut subir une déflexion selon au moins une première direction "au-dessus" (sur la figure 13, en fait, en-dessous) de, ou par rapport à, la cavité 93 pratiquée dans le substrat 88.

Selon une variante, non représentée sur une figure, un composant comporte deux microéléments de balayage réalisés sur un même côté du substrat (même configuration relative des deux miroirs que celle de la figure 11).

Dans les deux cas, la première membrane peut avoir une des structures qui ont été décrites ci-dessus, par exemple en liaison avec les figures 5 à 10, tandis que la deuxième membrane peut elle aussi avoir une quelconque des structures décrites ci-dessus, en particulier en liaison avec les figures 5 à 10. Chaque membrane peut être entraînée en flexion autour de l'axe Oz (voir notation sur la figure 5) mais aussi en torsion autour de l'axe Oy. De même, l'une des membranes peut être activée par des moyens piézoélectriques, tandis que l'autre est activée par des moyens électrostatiques. Un tel dispositif permet d'amplifier la dynamique d'angle accessible, puisque non seulement une déflexion séquentielle des membranes, mais également une déflexion simultanée, sont possibles.

Selon un mode particulier de réalisation, l'un des deux miroirs peut assurer la déflexion suivant une direction (par exemple avec une fréquence de commande f₁), tandis que le deuxième miroir assure une déflexion sur une autre direction (fréquence de commande f₂), la géométrie des moyens de commande de chaque miroir étant bien sûr adaptée à ce mode de fonctionnement.

Dans le cas de la figure 13, on dispose donc de deux zones réfléchissantes, les première et deuxième zones réfléchissantes étant disposées de manière à ce qu'un faisceau lumineux, dit faisceau entrant, provenant d'une certaine direction, subisse une première réflexion sur une des deux zones réfléchissantes, et une deuxième réflexion sur l'autre zone réfléchissante, pour former un faisceau sortant. Les deux zones réfléchissantes, réalisées sur les extrémités mobiles des membranes, peuvent être orientées suivant un même plan cristallographique du substrat. Elles peuvent définir deux plans parallèles ou sensiblement parallèles lorsque la partie mobile de chaque membrane, présentant une zone réfléchissante, est en position de repos : les deux plans peuvent être par exemple parallèles à un plan cristallographique donné du substrat.

Toutes les structures décrites ci-dessus sont compatibles avec les modes de fabrication collective utilisés en microélectronique.

Un procédé de réalisation d'un dispositif selon l'invention va maintenant être décrit.

D'une façon générale, un procédé de réalisation d'un microélément de balayage selon l'invention comporte :

- une étape de dépôt, sur une surface d'un substrat, d'une membrane en un matériau diélectrique,
- une étape de formation d'une cavité dans le substrat, une partie de la membrane, qui présente une zone réfléchissante, pouvant subir une déflexion selon au moins une première direction au-dessus de cette cavité,
- une étape de formation de moyens pour faire subir à cette partie de la membrane une déflexion selon au moins une direction.

La formation de la cavité peut être réalisée par attaque ionique réactive micro-onde.

La cavité peut être située au bord d'une ouverture débouchant à la surface du substrat sur laquelle la membrane est déposée, ou pouvant même traverser ce substrat.

Cette ouverture peut être réalisée par exemple par gravure chimique préférentielle. On peut donc ainsi dégager des parois orientées suivant des plans cristallographiques.

La membrane peut être éventuellement gravée pour y réaliser des ouvertures.

D'autres étapes, notamment pour la formation des moyens pour faire subir une déflexion à la membrane, sont décrites ci-dessous.

Un exemple détaillé va être donné pour la réalisation d'un dispositif conforme à celui de la figure 12, mais l'homme du métier saura adapter les différentes étapes pour obtenir des réalisations conformes, par exemple, à celles des figures 2 ou 11 ou 13. Par ailleurs, on prendra l'exemple d'un substrat en silicium et d'une membrane réalisée en silice, mais, là encore, l'homme du métier saura adapter les différentes étapes à des substrats et à des éléments d'autres natures.

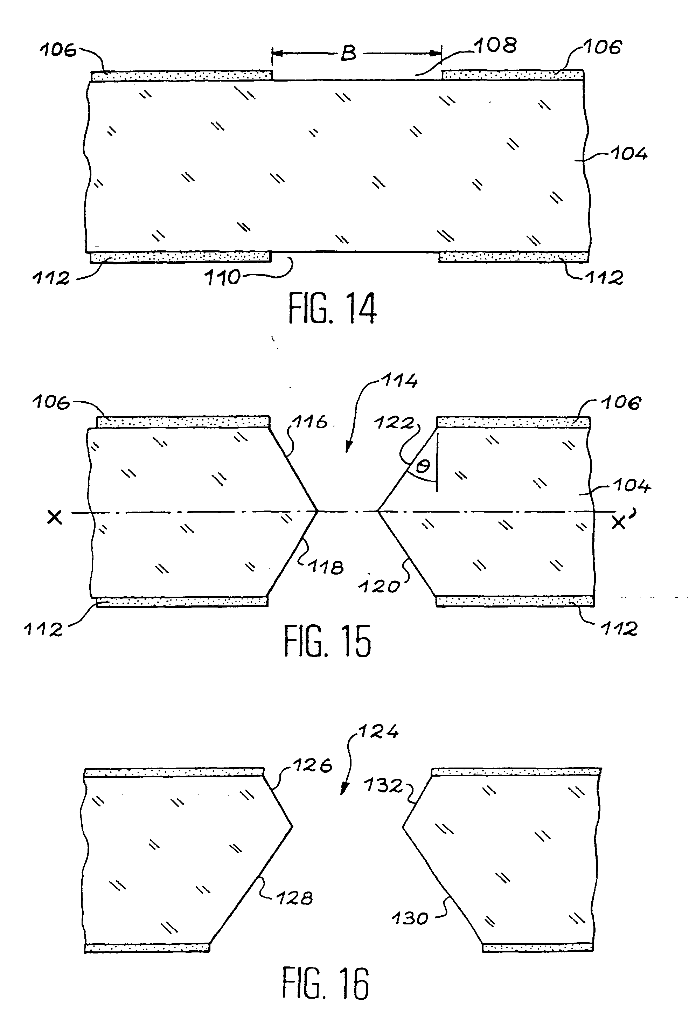

Dans une première étape, illustrée sur la figure 14, on réalise un masquage double face d'un substrat 104 en silicium. On peut utiliser par exemple des masques 106, 112 en silice déposés en CVD. Ce masquage peut par exemple suivre la trace des plans 1,1,1 sur le plan de surface 1,0,0 du substrat en silicium. Les masques présentent respectivement des ouvertures 108 et 110 dont les dimensions A (suivant une direction perpendiculaire au plan de la figure 14) et B (voir figure 14) dépendent de la géométrie désirée. En pratique, si l'on considère des plaques de silicium d'épaisseur de l'ordre de 500μm, on peut choisir A de l'ordre de 500 à 1500μm, en fonction de la section du faisceau lumineux à défléchir. B peut avoir des dimensions du même ordre. Bien entendu, il est toujours possible de choisir des plaques de silicium plus épaisses (de 1 à 2 mm) et d'augmenter les dimensions. De plus, les ouvertures 108 et 110 n'ont pas forcément les mêmes dimensions.

Dans une deuxième étape, on réalise une gravure chimique préférentielle du silicium (double face) ce qui conduit à la formation d'une ouverture 114 qui traverse le substrat 104.

Cette méthode de gravure repose sur la différence de vitesse de gravure entre différents plans cristallographiques d'un même matériau pour certains agents d'attaque.

En général, la vitesse d'attaque est très lente suivant l'un des plans cristallins (les plans de type (111) par exemple) et très rapide suivant les autres.

On obtient donc des géométries de gravure particulières qui découlent de cette propriété et dont la forme est imposée par les configurations angulaires des plans d'attaque lente et par l'orientation initiale des cristaux.

On peut appliquer ce procédé au silicium, dont les propriétés à cet égard sont bien connues. Mais des configurations tout à fait similaires peuvent être obtenues avec d'autres matériaux tels que le germanium ou avec les semi-conducteurs composés tels que GaAs ou InP ou autres. Il faut simplement prendre garde, dans ce dernier cas, à la présence de deux types de plans atomiques.

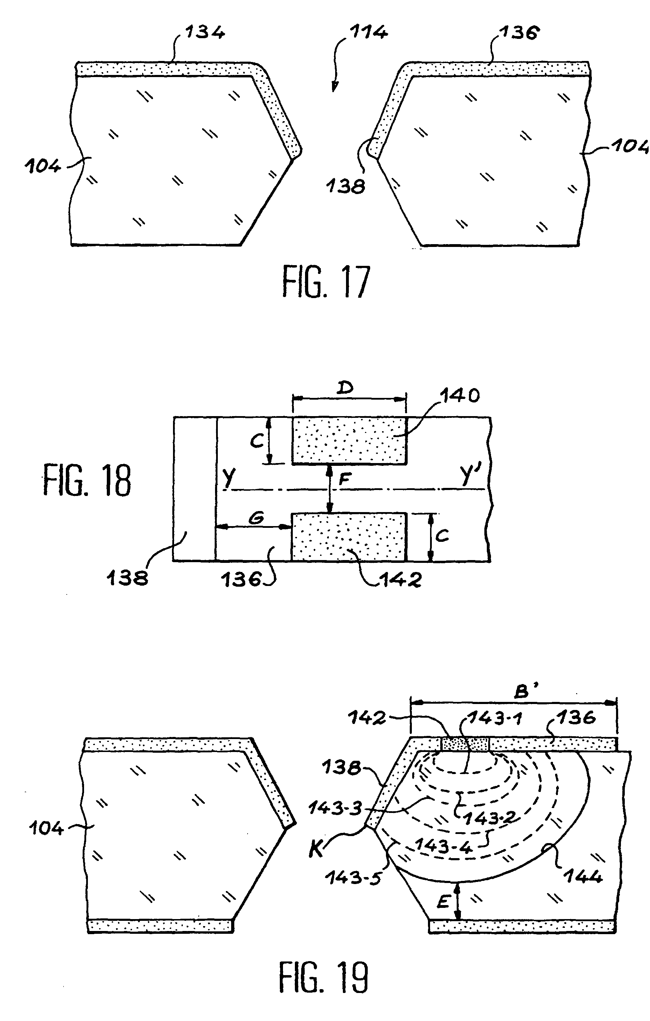

L'attaque préférentielle permet donc de dégager des parois 116, 118, 120, 122 orientées suivant des plans cristallographiques, tels que les plans 1,1,1 ou 1,-1,1. Ces plans forment alors avec la verticale un angle θ d'environ 36°. La structure représentée sur la figure 15 est symétrique par rapport à un plan médian contenu dans la tranche de silicium 104 et dont la trace est représentée sur la figure 15 par l'axe xx'. Il est également possible, et dans certains cas préférable, de réaliser une structure dissymétrique, par exemple en jouant sur les dimensions des ouvertures des masques. Une telle structure est illustrée sur la figure 16, où l'ouverture 124 présente, dans sa partie inférieure, des parois 128, 130 s'étendant sur une plus grande distance que les parois 126, 132 dans la partie supérieure.

Dans une troisième étape, les masques sont supprimés et, comme illustré sur la figure 17, un dépôt d'une couche 134, 136 de silice épaisse est réalisé, par exemple par PECVD. Cette couche de silice va constituer le corps de la membrane mobile. Le dépôt se fait uniquement sur la face supérieure du substrat 104. Son épaisseur dépend bien sûr de la rigidité souhaitée. En pratique, on utilise des couches de 4 à 40μm d'épaisseur.

Dans une quatrième étape, cette couche de silice peut être gravée. La figure 18 représente une vue de dessus de la couche 136 de silice, la référence 138 désignant la partie de la couche déposée sur la paroi inclinée de l'ouverture 114. Cette étape aboutit à la formation d'ouvertures 140, 142 qui permettront :

- de réaliser ultérieurement l'attaque du substrat 104 afin d'ouvrir une cavité sous la membrane et de la libérer partiellement,
- de définir une poutre reliant la partie mobile de la membrane à la zone de commande des mouvements de cette membrane (comme les poutres 40, 48, 54 sur les figures 5, 7, 8).

Sur la figure 18 les ouvertures sont représentées symétriquement par rapport à un plan perpendiculaire au substrat en silicium et dont la trace est représentée, sur la figure 18, par l'axe YY'. En fait, il est possible de donner à ces ouvertures une forme quelconque. De même, les dimensions, telles que les dimensions C, D, F, G (voir figure 18) peuvent être définies de manière quelconque. En pratique, ces dimensions sont de l'ordre de la centaine ou de plusieurs centaines de micromètres. Les masques utilisés pour la gravure de la couche 136 peuvent être des masques métalliques simples posés sur cette couche.

Une cinquième étape va permettre la réalisation, dans le substrat 104 d'une cavité 144 (voir figure 19) par gravure isotrope du silicium à partir des ouvertures 140, 142 pratiquées dans la couche 136 de silice. La technique utilisée est de préférence l'attaque ionique réactive micro-onde, utilisant par exemple du $SF_6$. Ce type d'attaque ionique possède une très grande sélectivité entre le silicium et la silice. La membrane 138, 136 peut donc être désolidarisée du substrat silicium 104 sans que la couche de silice 136, 138 constituant cette membrane soit notablement affectée. En pratique, les épaisseurs de silicium gravé étant de l'ordre de 300 µm (légèrement supérieur à la moitié de l'épaisseur des plaquettes de silicium) et la sélectivité étant supérieure à 100, la couche de silice n'est affectée que très faiblement par la gravure (seulement sur une épaisseur d'environ 2 à 3µm). Les géométries de gravure obtenues à partir des ouvertures 140, 142 pratiquées dans le masque de silice sont à peu près connues dès que les dimensions de ces ouvertures dépassent une centaine de microns. On peut, en première approximation, considérer que la profondeur d'attaque d(t) est égal au produit de la vitesse d'attaque par le temps de gravure et est à peu près la même dans toutes les directions de gravure, à partir des bords des ouvertures 140, 142.

Sur la figure 19 des traits interrompus 143-1,... 143-5 représentent l'évolution de la zone d'attaque à différents instants $t_1$, $t_2$, $t_3$, $t_4$, $t_5$. Pour une désolidarisation complète de la zone 138 du substrat 136, il faut que le front d'attaque atteigne au moins le point K, qui marque la limite inférieure de la zone 138. En général, il y aura surgravure au voisinage du plan de surface. Cette surgravure n'est pas gênante compte tenu du rôle de couche d'arrêt joué par la silice (effet de sélectivité entre la silice et le silicium). L'épaisseur E de silicium restant au bas du substrat sera relativement faible, en général plus faible qu'une demi-épaisseur du substrat. Afin d'augmenter la tenue mécanique de ce dernier, et donc du dispositif tout entier, il peut être intéressant d'utiliser une géométrie dissymétrique, comme celle de la figure 16, qui permet de garder des valeurs de E plus importantes.

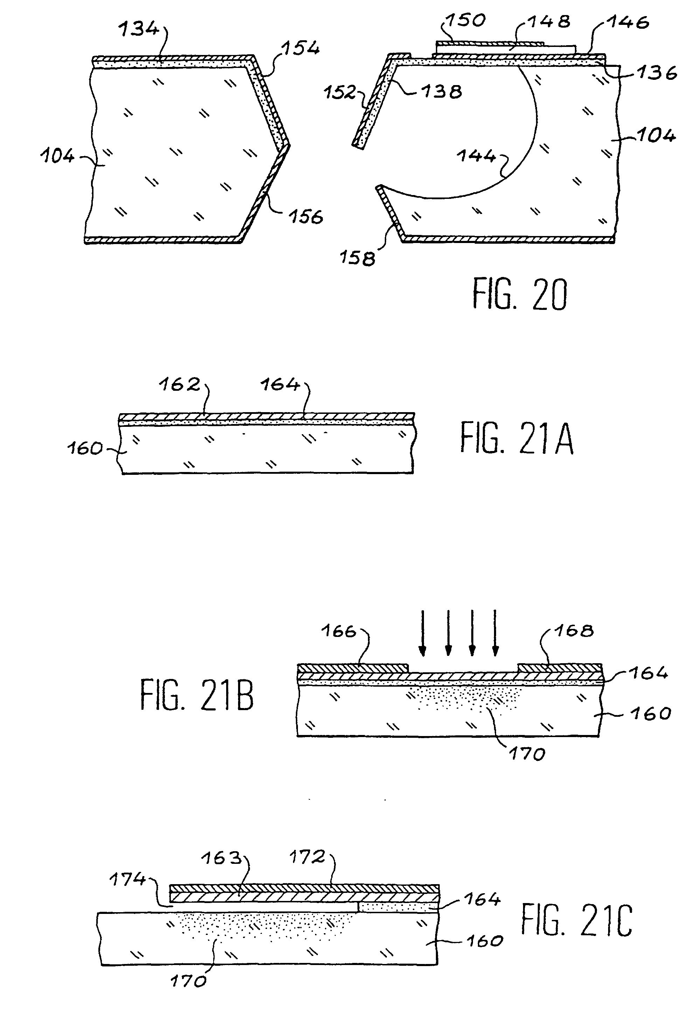

Dans le cas où le dispositif d'actionnement du mouvement de la membrane est du type piézoélectrique, on procède ensuite (figure 20) au dépôt et à la gravure de l'électrode inférieure 146, du matériau piézoélectrique 148 et de l'électrode supérieure 150.

On peut ensuite déposer une couche 152, 154, 156, 158 d'un matériau permettant d'augmenter la réflectivité des miroirs, par exemple un dépôt de métal (Ti, Au Al, Pt, Cr) ou un dépôt de multicouche diélectrique ($SiO_2$-$TiO_2$). Cette étape de dépôt d'une couche réfléchissante peut être éventuellement réalisée en même temps que les étapes de dépôt des électrodes 146, 150, si les dépôts métalliques mis en jeu sont identiques.

La structure obtenue est finalement celle de la figure 20. La membrane 138 est désolidarisée du substrat silicium, mais il reste encore à réaliser une étape de désolidarisation latérale. Ceci peut être fait par sciage sur toute l'épaisseur du substrat ; dans ce cas, les éléments de microbalayage sont individualisés et le traitement collectif est stoppé à cette étape. La désolidarisation latérale peut également être réalisée par sciage latéral sur une épaisseur légèrement supérieure à la moitié de la plaque de silicium, par exemple avant d'assembler une plaquette contenant les éléments de microbalayage avec d'autres plaquettes du dispositif à réaliser, l'individualisation des dispositifs s'effectuant après assemblage. Compte tenu de la fragilité des membranes, il peut être favorable de rigidifier les structures avant sciage, à l'aide d'une résine durcissable qui pourra être dissoute par la suite.

Les étapes décrites ci-dessus conviennent pour la réalisation d'un dispositif avec moyen d'actionnement piézoélectrique. Dans le cas d'un dispositif avec actionneur à force électrostatique, une partie des étapes décrites ci-dessus sont identiques : il s'agit en particulier de celles qui conduisent à la réalisation des doubles miroirs et de la membrane mobile. La grande différence provient de la réalisation de la commande électrostatique, avant le dépôt de la couche de silice 136.

De préférence la structure support utilisée pour réaliser la commande électrostatique est une structure SIMOX obtenue par implantation d'oxygène, puis recuit approprié, afin de réaliser une couche de silice isolante enterrée. L'intérêt de cette structure, dans le cas d'une commande électrostatique, est qu'elle permet de réaliser, par ablation localisée de la couche de silice enterrée, un espace interélectrode très fin (de l'ordre de 0,2 à 0,3 µm) et très uniforme. Ceci permet, entre autres, de minimiser les tensions de commande nécessaires à l'excitation mécanique de la membrane comportant le miroir mobile. Comme dans les étapes précédentes et compte tenu des dimensions importantes mises en jeu (de l'ordre de 100µm à 1 mm) et du caractère plus critique des positionnements, les masques utilisables pour la formation des électrodes peuvent être obtenus par des techniques de lithographie classique, ou bien ce sont des masques mécaniques.

On part donc d'une structure SIMOX comme celle illustrée sur la figure 21A où la référence 160 désigne un substrat en silicium, la référence 162 la surface supérieure du substrat, la couche de silice enterrée étant désignée par la référence 164. Ensuite (figure 21B), le masque 166, 168 est disposé sur la surface 162. On réalise alors l'électrode inférieure par dopage du support de silicium. Ce dopage est par exemple effectué par implantation de bore à forte dose dans les zones concernées, avec une énergie telle que le dopage obtenu 170 soit localisé juste au-dessous de la couche 164 de silice enterrée.

On procède ensuite à une dissolution localisée de la couche de silice enterrée. Cette dissolution s'effectue par attaque chimique (par exemple source d'attaque traditionnelle à base d'acide fluorhydrique) à travers une ou plusieurs ouvertures pratiquées dans la couche de silicium superficielle 162. Après dissolution localisée de la couche de silice, les ouvertures sont éventuellement bouchées par un dépôt couvrant (non représenté) (par exemple $Si_3N_4$ obtenu en CVD). Ensuite, on supprime les masques, la couche de silicium de surface et la couche de silice enterrée dans les zones complémentaires aux zones de commande. Des dépôts métalliques permettent les prises de contact des électrodes inférieure et supérieure. On obtient donc la structure de zones de commande localisées représentées sur la figure 21C, la zone de dopage 170 constituant l'électrode inférieure et la couche de silice superficielle 163, séparée de cette zone de dopage par un interstice 174, servant de support à l'électrode supérieure 172. Les prises de contact ne sont pas représentées sur cette figure.

Après la réalisation de ces électrodes de commande les étapes déjà décrites ci-dessus (réalisation de la membrane en silice, réalisation de la cavité par gravure chimique préférentielle du silicium) peuvent être reprises, ainsi que l'étape de dépôt et de gravure des couches réfléchissantes. Finalement, la structure obtenue pour la partie du dispositif comportant la membrane et les électrodes de commande est similaire à celle représentée sur la figure 3.

Dans le cas d'une structure telle que celle décrite ci-dessus en liaison avec la figure 13, le procédé de réalisation pouvant être mis en oeuvre est dérivé du procédé décrit ci-dessus. Ce dernier est un procédé "simple face" en ce sens qu'une membrane "mobile", pouvant subir une déflexion suivant au moins une direction au-dessus d'une cavité pratiquée dans le substrat, n'est réalisée que d'un côté de ce substrat. Un procédé "double face" permettant d'aboutir au dispositif selon la figure 13, peut également être réalisé. Dans ce cas, les étapes décrites ci-dessus en liaison avec les figures 14, 15 et 16 restent les mêmes. Ensuite, des dépôts de couches de silice épaisse, par exemple par PECVD, peuvent être réalisés des deux côtés du substrat, ces couches de silice constituant les corps des membranes mobiles. Là encore, l'épaisseur des couches dépend de la rigidité souhaitée, des couches de 4 à 40 µm d'épaisseur étant en pratique utilisées.

Ces couches de silice sont ensuite gravées (étape analogues à celle de la figure 18). Cette étape de gravure aboutit à la formation, dans chaque membrane, d'ouvertures qui permettront :

- de réaliser ensuite l'attaque du substrat, de chaque côté, afin d'ouvrir une cavité sous chaque membrane, et de libérer partiellement celle-ci,
- de définir, pour chaque membrane, une poutre reliant la partie mobile de celle-ci à la zone de commande des mouvements de cette membrane.

Ensuite, le substrat est gravé, à partir des ouvertures pratiquées dans les couches de silice. La technique de gravure a été exposée ci-dessus, en liaison avec la figure 19.

On peut ensuite procéder à la réalisation de moyens d'actionnement piézoélectriques, au dépôt de matériau permettant d'augmenter la réflectivité des miroirs (voir exemple donné ci-dessus) et à réaliser une désolidarisation latérale, par exemple par sciage sur toute l'épaisseur du substrat.

Dans le cas de réalisation de moyens d'actionnement piézoélectriques, les étapes de procédé décrites ci-dessus en liaison avec les figures 21A-21C conviennent également.

Afin de réaliser un dispositif tel que décrit ci-dessus en liaison avec la figure 13, il est également possible de réaliser deux microéléments de balayage indépendant, comportant chacun une membrane formée sur un substrat, au-dessus d'une cavité, telle que celle décrite en liaison avec les figures 2 et 3, et de réaliser un assemblage "tête bêche" des deux composants. Dans ce cas, on n'a besoin d'avoir recours qu'à un procédé "simple face", mais il faut ensuite mettre en oeuvre une étape d'assemblage de précision des deux composants l'un par rapport à l'autre.

L'invention permet donc de réaliser un microélément de balayage, pouvant entrer lui-même dans la réalisation d'un composant microoptique permettant de défléchir un faisceau "vers l'avant" : la direction du faisceau sortant est à peu près identique, ou en tout cas très voisine, à la direction du faisceau incident. Ainsi, on peut assembler, en cascade, différents composants ainsi réalisés. Un assemblage en cascade de deux composants est représenté schématiquement sur la figure 23. Les surfaces des deux substrats sont symbolisées par des traits interrompus.

Un faisceau entrant rencontre un premier miroir 188 et est dévié vers un second miroir 186 ; il ressort du premier composant en direction d'un premier miroir 190 d'un second composant qui le dévie, par réflexion, vers un second miroir 192 du second composant. Chaque composant peut être d'un des types décrits ci-dessus, par exemple en liaison avec les figures 12 ou 13. On peut ainsi assembler en série ou en cascade N>2 (N=3, 4,..., etc.) composants selon l'invention.

Dans certains cas, il est avantageux que le faisceau sortant ait la même direction que le faisceau incident : cette condition est en particulier réalisée pour un couple de miroirs parallèles, ou quasiment parallèles, comme dans le cas décrit ci-dessus en liaison avec la figure 12.

L'angle $\alpha$ entre le plan du, ou des, substrat(s) et chaque miroir est alors choisi de manière à avoir une valeur compatible avec la fonction souhaitée et une utilisation pratique du dispositif.

La figure 22 représente schématiquement deux surfaces réfléchissantes 180, 182, formant chacune un angle $\alpha$ avec une des surfaces du substrat. (Ces surfaces sont représentées schématiquement par des traits interrompus). Un faisceau incident 184 rencontre la surface réfléchissante 182 au point O, et est réfléchi en direction de la surface réfléchissante 180 qu'il rencontre au point O'. Un repère Oxy est défini par le faisceau incident 184. Le faisceau réfléchi par la surface 182 fait avec l'axe Oy un angle s. Choisir un angle $\varepsilon$ supérieur ou strictement supérieur à 0, mais inférieur à 90°, revient à choisir un angle $\alpha$ compris entre 90° et 135°.

d représente la distance entre les deux miroirs 180, 182. Si l'on souhaite que cette distance ne soit pas trop grande, comparée aux dimensions de ces miroirs (qui sont typiquement de l'ordre de 1 à 2 mm), tout en gardant le mode de réalisation proposé (par attaque chimique préférentielle), il faut que :

d tg ε ∼ 200-500 µm.

d'où : 10°<ε<30°.

Comme, par ailleurs, $\varepsilon = 3\frac{\pi}{2} - 2\alpha$, on a :

120°<α<130°.

Dans une des configurations proposées ci-dessus en exemple, α est environ égal à 125° (angle entre les plans (1,1,1) et (1,0,0) du cristal silicium) : cette valeur répond bien aux critères ci-dessus.

## Revendications

1. Microélément de balayage pour système optique, comprenant :

   - un substrat (12, 76, 88),
   - une membrane (14, 16, 77, 78, 94, 95) en un matériau diélectrique déposée sur une surface du substrat, la membrane définissant deux plans faisant entre eux un angle α non nul, une partie (14, 77, 95) de la membrane présentant une zone réfléchissante (20), et pouvant subir une déflexion selon au moins une première direction au-dessus d'une cavité (18, 82, 92) pratiquée dans le substrat,
   - des moyens (22, 24, 26 ; 30, 32 ; 80,96) pour faire subir à ladite partie de la membrane une déflexion selon au moins la première direction,

   **caractérisé en ce qu'**il comprend des moyens (40, 48, 54) pour faire subir à ladite partie de la membrane une déflexion selon au moins une deuxième direction différente de la première direction.

2. Microélément de balayage selon la revendication 1, l'angle α étant compris entre 90° et 135°.

3. Microélément de balayage selon la revendication 1, l'angle α étant compris entre 120° et 130°.

4. Microélément de balayage selon l'une quelconque des revendications précédentes, l'amplitude suivant une des directions de déflexion étant supérieure à l'amplitude suivant une des autres directions de déflexion.

5. Microélément de balayage selon l'une quelconque des revendications précédentes, la partie de la membrane pouvant subir une déflexion étant reliée, par une micropoutre (40, 48, 54, 66), à une partie fixe qui porte les moyens pour faire subir une déflexion à la partie mobile.

6. Microélément de balayage selon la revendication 5, la partie fixe présentant un axe de symétrie (xx') par rapport auquel la micropoutre est parallèle.

7. Microélément de balayage selon la revendication 6, la micropoutre étant décalée par rapport à cet axe.

8. Microélément de balayage selon une des revendications 6 ou 7, la partie mobile étant décalée latéralement par rapport à l'axe de symétrie de la partie fixe.

9. Microélément de balayage selon une des revendications 6 à 8, les moyens pour faire subir une déflexion à la partie mobile comportant plusieurs groupes de moyens pour faire subir une déflexion, répartis de part et d'autre de l'axe de symétrie.

10. Microélément de balayage selon l'une des revendications 1 à 9, les moyens pour faire subir une déflexion étant du type piézoélectrique ou électrostatique.

11. Microélément de balayage selon l'une des revendications 1 à 10, la partie de la membrane pouvant subir une déflexion étant orientée suivant un plan cristallographique du substrat.

12. Microélément de balayage selon l'une des revendications 1 à 11, la cavité étant située au bord d'une ouverture (74,90) débouchant à la surface du substrat sur laquelle la membrane est déposée.

13. Microélément de balayage selon la revendication 12, l'ouverture débouchante (90) étant une ouverture traversant le substrat (88).

14. Dispositif de microoptique comportant :

   - un microélément de balayage selon l'une des revendications 1 à 13,
   - une seconde zone réfléchissante (84, 98) disposée sur le substrat de manière à réfléchir, en direction de la zone réfléchissante de la membrane, un faisceau lumineux, dit faisceau entrant (85, 99), provenant d'une certaine direction, ce faisceau entrant subissant alors deux réflexions successives pour former un faisceau sortant (89, 103).

15. Dispositif de microoptique selon l'une des revendications 12 ou 13 et selon la revendication 14, la seconde zone réfléchissante étant formée par ou sur une paroi de l'ouverture débouchante ou traversante pratiquée dans le substrat.

16. Dispositif de microoptique selon la revendication 15, la paroi de l'ouverture sur laquelle la deuxième zone réfléchissante est formée étant orientée suivant un plan cristallographique du substrat.

17. Dispositif de microoptique selon l'une des revendications 14 à 16, la seconde zone réfléchissante étant disposée de façon à ce que le faisceau entrant et le faisceau sortant fassent entre eux un angle supérieur à 90°.

18. Dispositif de microoptique selon l'une des revendications 14 à 17, les deux zones réfléchissantes (95, 98) définissant deux plans sensiblement parallèles lorsque la partie de la membrane présentant une zone réfléchissante est en position de repos.

19. Dispositif de microoptique selon la revendication 18, les deux plans étant parallèles à un plan cristallographique donné du substrat.

20. Dispositif de microoptique, comportant :

- un substrat (88),
- une première membrane (94) en un matériau diélectrique déposée sur une première surface du substrat, la membrane définissant deux plans faisant entre eux un angle $\alpha$ non nul, une partie (95) de la première membrane présentant une première zone réfléchissante, et pouvant subir une déflexion selon au moins une première direction par rapport à une première cavité (92) pratiquée dans le substrat,
- des premiers moyens (96) pour faire subir à cette partie de la première membrane une déflexion selon au moins la première direction,
- une deuxième membrane (91) en un matériau diélectrique déposée sur une deuxième surface du substrat, la membrane définissant deux plans faisant entre eux un angle $\beta$ non nul, une partie (97) de la deuxième membrane présentant une deuxième zone réfléchissante, et pouvant subir une déflexion selon au moins une deuxième direction par rapport à une deuxième cavité pratiquée dans le substrat,
- des deuxièmes moyens (100) pour faire subir à cette partie de la deuxième membrane une déflexion selon au moins la deuxième direction,

**caractérisé en ce que** le dispositif comprend :

- des moyens pour faire subir à ladite partie (95) de la première membrane une déflexion selon au moins une direction différente de la première direction, et
- des moyens pour faire subir à ladite partie (97) de la deuxième membrane une déflexion selon au moins une direction différente de la deuxième direction.

21. Dispositif de microoptique selon la revendication 20, les première et deuxième surfaces du substrat étant situées d'un même côté par rapport au substrat, les deux cavités étant situées au bord d'une ouverture débouchant sur cette surface du substrat.

22. Dispositif de microoptique selon la revendication 20, les première et deuxième surfaces du substrat étant situées sur des côtés opposés du substrat, les cavités (92, 93) étant situées au bord d'une ouverture (90) traversant le substrat.

23. Dispositif de microoptique selon l'une des revendications 20 à 22, les angles $\alpha$ et $\beta$ étant compris entre 90° et 135°.

24. Dispositif de microoptique selon l'une des revendications 20 à 22, les angles $\alpha$ et $\beta$ étant compris entre 120° et 130°.

25. Dispositif de microoptique selon l'une quelconque des revendications 20 à 24, l'amplitude suivant une des directions de déflexion étant supérieure à l'amplitude suivant une des autres directions de déflexion.

26. Dispositif de microoptique selon l'une des revendications 20 à 25, la partie de l'une et/ou de l'autre membrane qui peut subir une déflexion étant reliée, par une micropoutre, à une partie fixe qui porte les moyens pour faire subir une déflexion à la partie mobile.

27. Dispositif de microoptique selon la revendication 26, la partie fixe présentant un axe de symétrie par rapport auquel la micropoutre est parallèle.

28. Dispositif de microoptique selon la revendication 27, la micropoutre étant décalée par rapport à cet axe.

29. Dispositif de microoptique selon l'une des revendications 27 ou 28, la partie mobile étant décalée latéralement par rapport à l'axe de symétrie de la partie fixe.

30. Dispositif de microoptique selon l'une des revendications 27 à 29, les moyens pour faire subir une déflexion à la partie mobile comportant plusieurs groupes de moyens pour faire subir une déflexion, répartie de part et d'autre de l'axe de symétrie.

**31.** Dispositif de microoptique selon l'une des revendications 20 à 30, les premier et second moyens pour faire subir une déflexion étant du type piézoélectrique ou électrostatique.

**32.** Dispositif de microoptique comportant deux dispositifs de microoptique, chacun selon l'une des revendications 14 à 31, disposés en cascade, le faisceau sortant d'un des microdispositifs étant un faisceau entrant pour l'autre microdispositif.

**Patentansprüche**

**1.** Mikroabtastelement für optisches System, umfassend:

- ein Substrat (12, 76, 88),
- eine Membran (14, 16, 77, 78, 94, 95) aus einem dielektrischen Material, abgeschieden auf einer Oberfläche des Substrats, wobei die Membran zwei Ebenen definiert, die zwischen sich einen Nichtnullwinkel $\alpha$ bilden, ein Teil (14, 77, 95) der Membran eine reflektierende Zone aufweist und in wenigstens einer ersten Richtung abgelenkt werden kann, über einem in dem Substrat vorgesehenen Hohlraum (18, 82, 92),
- Einrichtungen (22, 24, 26 ; 30, 32 ; 80, 96), um den genannten Teil der Membran in wenigstens der ersten Richtung abzulenken,

**dadurch gekennzeichnet,**
**dass** es Einrichtungen (40, 48, 54) zum Ablenken des genannten Teils der Membran in wenigstens eine bezüglich der ersten Richtung unterschiedliche zweite Richtung umfasst.

**2.** Mikroabtastelement nach Anspruch 1, wobei der Winkel $\alpha$ zwischen 90° und 135° enthalten ist.

**3.** Mikroabtastelement nach Anspruch 1, wobei der Winkel $\alpha$ zwischen 120° und 130° enthalten ist.

**4.** Mikroabtastelement nach einem der vorangehenden Ansprüche, wobei der Ausschlag in einer der Ablenkrichtungen größer ist als der Ausschlag in einer der anderen Ablenkrichtungen.

**5.** Mikroabtastelement nach einem der vorangehenden Ansprüche, wobei der Teil der Membran, der abgelenkt werden kann, durch einen Mikroträger (40, 48, 54, 66) mit einem festen Teil verbunden ist, der die Einrichtungen trägt, mit denen der bewegliche Teil abgelenkt werden kann.

**6.** Mikroabtastelement nach Anspruch 5, wobei der feste Teil eine Symmetrieachse (xx') aufweist, zu der der Mikroträger parallel ist.

**7.** Mikroabtastelement nach Anspruch 6, wobei der Mikroträger in Bezug auf diese Achse versetzt ist.

**8.** Mikroabtastelement nach einem der Ansprüche 6 oder 7, wobei der bewegliche Teil seitlich versetzt ist in Bezug auf die Symmetrieachse des festen Teils.

**9.** Mikroabtastelement nach einem der Ansprüche 6 bis 8, wobei die Einrichtungen zum Bewirken einer Ablenkung des beweglichen Teils mehrere Gruppen von auf beide Seiten der Symmetrieachse verteilten Einrichtungen zum Bewirken einer Ablenkung umfassen.

**10.** Mikroabtastelement nach einem der Ansprüche 1 bis 9, wobei die Einrichtungen zum Bewirken einer Ablenkung vom piezoelektrischen oder elektrostatischen Typ sind.

**11.** Mikroabtastelement nach einem der Ansprüche 1 bis 10, wobei der Teil der Membran, der abgelenkt werden kann, entsprechend einer kristallographischen Ebene des Substrats ausgerichtet ist.

**12.** Mikroabtastelement nach einem der Ansprüche 1 bis 11, wobei der Hohlraum sich am Rand einer Öffnung (74, 90) befindet, die an der Oberfläche des Substrats mündet, auf dem die Membran abgeschieden ist.

**13.** Mikroabtastelement nach Anspruch 12, wobei die mündende Öffnung (90) eine das Substrat (88) durchquerende Öffnung ist.

**14.** Mikrooptikvorrichtung, umfassend:

- ein Mikroabtastelement nach einem der Ansprüche 1 bis 13,
- eine zweite reflektierende Zone (84, 98), so auf dem Substrat angeordnet, dass sie einen aus einer bestimmten Richtung kommenden, Eingangslichtstrahl genannten Lichtstrahl (85, 99) in Richtung der reflektierenden Zone der Membran reflektiert, sodass dieser Eingangslichtstrahl also zwei aufeinanderfolgende Reflexionen erfährt und dann den Ausgangslichtstrahl (89, 103) bildet.

**15.** Mikrooptikvorrichtung nach einem der Ansprüche 12 oder 13 und nach Anspruch 14, wobei die zweite reflektierende Zone durch eine Wand oder auf einer Wand der in dem Substrat vorgesehenen Öffnung , mündend oder durchquerend, realisiert wird.

**16.** Mikrobptikvorrichtung nach Anspruch 15, wobei die Wand der Öffnung, auf der die zweite reflektierende Zone realisiert ist, entsprechend einer kristallographischen Ebene des Substrats ausgerichtet ist.

17. Mikrooptikvorrichtung nach einem der Ansprüche 14 bis 16, wobei die zweite reflektierende Zone so angeordnet ist, dass der Eingangslichtstrahl und der Ausgangslichtstrahl zwischen sich einen Winkel größer als 90° bilden.

18. Mikrooptikvorrichtung nach einem der Ansprüche 14 bis 17, wobei die beiden reflektierenden Zonen (95, 98) zwei im Wesentlichen parallele Zonen definieren, wenn der Teil der Membran, der eine reflektierende Zone bildet, in Ruhestellung ist.

19. Mikrooptikvorrichtung nach Anspruch 18, wobei die beiden Ebenen parallel sind zu einer bestimmten kristallographischen Ebene des Substrats.

20. Mikrooptikvorrichtung, umfassend:

   - ein Substrat (88),
   - eine erste Membran (94) aus einem auf einer ersten Oberfläche des Substrats abgeschiedenen Material, wobei die Membran zwei Ebenen definiert, die zwischen sich einen Nichtnullwinkel a bilden, ein Teil (95) der ersten Membran eine erste reflektierende Zone aufweist und in wenigstens einer ersten Richtung abgelenkt werden kann, bezogen auf einen in dem Substrat vorgesehenen ersten Hohlraum (92),
   - erste Einrichtungen (96), um diesen Teil der Membran in wenigstens der ersten Richtung abzulenken,
   - eine zweite Membran (91) aus einem auf einer zweiten Oberfläche des Substrats abgeschiedenen Material, wobei die Membran zwei Ebenen definiert, die zwischen sich einen Nichtnullwinkel $\alpha$ bilden, ein Teil (97) der zweiten Membran eine zweite reflektierende Zone aufweist und in wenigstens einer zweiten Richtung abgelenkt werden kann, bezogen auf einen in dem Substrat vorgesehenen zweiten Hohlraum (92),
   - zweite Einrichtungen (100), um diesen Teil der zweiten Membran in wenigstens der zweiten Richtung abzulenken,

   **dadurch gekennzeichnet, dass** die Vorrichtung umfasst:

   - Einrichtungen zum Ablenken des genannten Teils (95) der ersten Membran in wenigstens eine bezüglich der ersten Richtung unterschiedliche Richtung, und
   - Einrichtungen zum Ablenken des genannten Teils (97) der zweiten Membran in wenigstens eine bezüglich der zweiten Richtung unterschiedliche Richtung.

21. Mikrooptikvorrichtung nach Anspruch 20, wobei die erste und die zweite Oberfläche des Substrats sich in Bezug auf das Substrat auf einer selben Seite befinden und die beiden Hohlräume sich am Rand einer Öffnung befinden, die an dieser Oberfläche des Substrats mündet.

22. Mikrooptikvorrichtung nach Anspruch 20, wobei die erste und die zweite Oberfläche des Substrats sich auf entgegengesetzten Seiten des Substrats befinden und die Hohlräume (92, 93) sich am Rand einer das Substrat durchquerenden Öffnung (90) befinden.

23. Mikrooptikvorrichtung nach einem der Ansprüche 20 bis 22, wobei die Winkel $\alpha$ und $\beta$ zwischen 90° und 135° enthalten sind.

24. Mikrooptikvorrichtung nach einem der Ansprüche 20 bis 22, wobei die Winkel $\alpha$ und $\beta$ zwischen 120° und 130° enthalten sind.

25. Mikrooptikvorrichtung nach einem der Ansprüche 20 bis 24, wobei der Ausschlag in einer der Ablenkrichtungen größer ist als der Ausschlag in einer der anderen Ablenkrichtungen.

26. Mikrooptikvorrichtung nach einem der Ansprüche 20 bis 25, wobei der Teil der einen und/oder der anderen Membran, der abgelenkt werden kann, durch einen Mikroträger mit einem festen Teil verbunden ist, der die Einrichtungen trägt, mit denen der bewegliche Teil abgelenkt werden kann.

27. Mikrooptikvorrichtung nach Anspruch 26, wobei der feste Teil eine Symmetrieachse aufweist, zu der der Mikroträger parallel ist.

28. Mikrooptikvorrichtung nach Anspruch 27, wobei der Mikroträger in Bezug auf diese Achse versetzt ist.

29. Mikrooptikvorrichtung nach einem der Ansprüche 27 oder 28, wobei der bewegliche Teil seitlich versetzt ist in Bezug auf die Symmetrieachse des festen Teils.

30. Mikrooptikvorrichtung nach einem der Ansprüche 27 bis 29, wobei die Einrichtungen zum Bewirken einer Ablenkung des beweglichen Teils mehrere Gruppen von auf beide Seiten der Symmetrieachse verteilten Einrichtungen zum Bewirken einer Ablenkung umfassen.

31. Mikrooptikvorrichtung nach einem der Ansprüche 20 bis 30, wobei die ersten und zweiten Einrichtungen zum Bewirken einer Ablenkung vom piezoelektrischen oder elektrostatischen Typ sind.

32. Mikrooptikvorrichtung, zwei kaskadenförmig angeordnete Mikrooptikvorrichtungen umfassend, jede nach einem der Ansprüche 14 bis 31, wobei der Ausgangsstrahl von einer der Mikrooptikvorrichtungen ein Eingangsstrahl der anderen Mikrooptikvorrichtung ist.

**Claims**

1. Scanning micro-element for an optical system comprising:

   - a substrate (12, 76, 88),
   - a membrane (14, 16, 77, 78, 94, 95) of a first dielectric material deposited on a surface of the substrate, the membrane defining two planes forming between them a non-zero angle $\alpha$, part (14, 77, 95) of the membrane having a reflecting zone (20) and being able to undergo a deflection in at least one first direction above a cavity (18, 82, 92) made in the substrate,
   - means (22, 24, 26, 30, 32, 80, 96) for making said part of the membrane undergo a deflection in at least the first direction,

   **characterized in that** it comprises:

   - means (40, 48, 54) for making said part of the membrane undergo a deflection in at least one second direction different from the first direction.

2. Scanning micro-element according to claim 1, the angle $\alpha$ being between 90° and 135°.

3. Scanning micro-element according to claim 1, the angle $\alpha$ being between 120° and 130°.

4. Scanning micro-element according to any one of the preceding claims, the amplitude along one of the deflection directions being greater than the amplitude along one of the other deflection directions.

5. Scanning micro-element according to one of the preceding claims, the part of the membrane that can be deflected being connected through a micro-beam (40, 48, 54, 66) to a fixed part which supports means of applying a deflection to the mobile part.

6. Scanning micro-element according to claim 5, the fixed part including an axis of symmetry (xx') to which the micro-beam is parallel.

7. Scanning micro-element according to claim 6, the micro-beam being offset with respect to this axis.

8. Scanning micro-element according to one of claims 6 or 7, the mobile part being offset laterally with respect to the axis of symmetry of the fixed part.

9. Scanning micro-element according to one of the claims 6 to 8, the means of applying a deflection to the mobile part including several groups of means of applying a deflection distributed on each side of the axis of symmetry.

10. Scanning micro-element according to one of claims 1 to 9, the means provided to apply a deflection being of the piezoelectric or electrostatic type.

11. Scanning micro-element according to one of claims 1 to 10, the part of the membrane to which a deflection is to be applied being oriented along a crystallographic plane of the substrate.

12. Scanning micro-element according to one of the claims 1 to 11, the cavity being located at the edge of an opening (74, 90) issuing at the surface of the substrate on which the membrane is deposited.

13. Scanning micro-element according to claim 12, the issuing opening (90) being a through opening passing through the substrate (88).

14. Microoptical device comprising:

   - a scanning micro-element according to one of claims 1 to 13,
   - a second reflecting area (84, 98) laid out on the substrate so as to reflect a light beam from a given direction, called the incoming beam, towards the reflecting area of the membrane, this incoming beam (85, 99) then being subjected to two successive reflections to form an outgoing beam (89, 103).

15. Microoptical device according to one of claims 12 or 13 and according to claim 14, the second reflecting area being formed by or on a wall of the issuing or through opening formed in the substrate.

16. Microoptical device according to claim 15, the wall of the opening on which the second reflecting area is formed being oriented along a crystallographic plane of the substrate.

17. Microoptical device according to one of the claims 14 to 16, the second reflecting area being laid out such that the angle between the incoming beam and the outgoing beam exceeds 90°.

18. Microoptical device according to one of the claims 14 to 17, the two reflecting areas (95, 98) defining two approximately parallel planes when the part of the membrane with a reflecting area is in the at rest position.

**19.** Microoptical device according to claim 18, the two planes being parallel to a crystallographic plane in the substrate.

**20.** Microoptical device comprising:

- a substrate (88),
- a first membrane (94) of a dielectric material deposited on a first surface of the substrate, the membrane defining two planes forming with one another a non-zero angle $\alpha$, part (95) of the first membrane having a first reflecting area and being able to undergo a deflection in at least one first direction relative to a first cavity (92) made in the substrate,
- means (92) for making said part of the first membrane undergo a deflection in at least the first direction,
- a second membrane (91) of a dielectric material deposited on a second surface of the substrate, the membrane defining two planes forming between one another a non-zero angle $\beta$, part (97) of the second membrane having a second reflecting area and being able to undergo a deflection in at least one second direction relative to a second cavity made in the substrate,
- second means (100) for making said part of the second membrane undergo a deflection in at least the second direction,

**characterized in that** the device comprises:

- means for making said part (95) of the first membrane undergo a deflection in at least one direction different from the first direction and
- means for making said part (97) of the second membrane undergo a deflection in at least one direction different from the second direction.

**21.** Microoptical device according to claim 20, the first and second substrate surfaces being located on the same side of the substrate, the two cavities being located at the edge of an opening issuing onto said substrate surface.

**22.** Microoptical device according to claim 20, the first and second substrate surfaces being located on opposite sides of the substrate, the cavities (92, 93) being located at the edge of an opening (90) passing through the substrate.

**23.** Microoptical device according to one of claims 20 to 22, the angles $\alpha$ and $\beta$ being between 90° and 135°.

**24.** Microoptical device according to one of claims 20 to 22, the angles $\alpha$ and $\beta$ being between 120° and 130°.

**25.** Microoptical device according to one of the claims 20 to 24, the amplitude along one of the deflection directions being greater than the amplitude along one of the other deflection directions.

**26.** Microoptical device according to one of claims 20 to 25, the part of one and/or the other membrane that can be deflected being connected through a micro-beam to a fixed part that supports means of applying a deflection to the mobile part.

**27.** Microoptical device according to claim 26, the fixed part presenting an axis of symmetry with respect to which the micro-beam is parallel.

**28.** Microoptical device according to claim 27, the micro-beam being offset relative to this axis.

**29.** Microoptical device according to one of claims 27 or 28, the mobile part being offset laterally with respect to the axis of symmetry of the fixed part.

**30.** Microoptical device according to one of the claims 27 to 29, the means of applying a deflection to the mobile part including several groups of means for applying a deflection, distributed on each side of the axis of symmetry.

**31.** Microoptical device according to one of claims 20 to 30, the first and second means of applying a deflection being of the piezoelectric type or electrostatic type.

**32.** Microoptical device comprising two microoptical devices, each according to one of claims 14 to 31, laid out in cascade, the outgoing beam from one of the micro-devices being an incoming beam for the other micro-device.

FIG. 1

FIG. 2

FIG. 3

FIG. 4

FIG. 5

FIG. 6

48

50

52

FIG. 7

58

56

54

FIG. 8

62

60

64

FIG. 9

FIG.10

FIG. 11

FIG. 12

FIG. 13

FIG. 23

FIG. 22

FIG. 14

FIG. 15

FIG. 16

FIG. 17

FIG. 18

FIG. 19

FIG. 20

FIG. 21A

FIG. 21B

FIG. 21C